# EUROPEAN PATENT SPECIFICATION

(11) **EP 4 270 883 B1**
(45) Date of publication and mention of the grant of the patent: **19.08.2026**
(21) Application number: 23169539.6
(22) Date of filing: 24.04.2023
(51) Int. Cl.: H04L 12/46

(54) **ELECTRONIC CONTROL DEVICE, DATA COMMUNICATION METHOD, AND DATA COMMUNICATION PROGRAM**
ELEKTRONISCHE STEUERUNGSVORRICHTUNG, DATENKOMMUNIKATIONSVERFAHREN UND DATENKOMMUNIKATIONSPROGRAMM
DISPOSITIF DE COMMANDE ÉLECTRONIQUE, PROCÉDÉ DE COMMUNICATION DE DONNÉES ET PROGRAMME DE COMMUNICATION DE DONNÉES

(30) Priority: 27.04.2022 JP 2022073342
(43) Date of publication of application: 01.11.2023
(73) Proprietor: DENSO CORPORATION, Kariya-city, Aichi-pref., 448-8661 (JP); TOYOTA JIDOSHA KABUSHIKI KAISHA, Aichi-ken, 471-8571 (JP)
(72) Inventor: TSUBOI, Toshinori, Kariya-city, Aichi-pref., 448-8661 (JP); ARAI, Ryota, Nagoya-shi, Aichi-pref., 451-6009 (JP); HOSOI, Takashi, Nagoya-shi, Aichi-pref., 451-6009 (JP)
(74) Representative: Winter, Brandl - Partnerschaft mbB

(56) References cited:
- EP-A2- 1 191 759
- US-A1- 2014 133 350
- US-A1- 2020 382 254

## Description

The present disclosure relates to an electronic control device, a data communication method and a data communication program.

For example, CAN (Controller Area Network, registered trademark) and Ethernet (registered trademark) are used as communication protocols for data communication between in-vehicle electronic control devices (hereinafter referred to as ECU, i.e., Electronic Control Units (see JP 2015 - 139 093 A, for example).

In this case, when the first control unit and the second control unit are mounted on the ECU and the first control unit is directly connected to the first communication bus conforming to the first communication protocol, the application to be executed by the first control unit can handle data of the first communication protocol. However, if the second control unit is not directly connected to the first communication bus, the application to be executed by the second control unit cannot handle data of the first communication protocol. In this way, there may be a difficulty that the development of the application is restricted by the connection form of the control unit that executes the application, and the degree of freedom in developing the application cannot be ensured.

Reference ist further made to US 2014 / 133 350 A1 which was determined to state of the art. US 2014 / 133 350 A1 describes an electronic control device comprising: a control unit that executes an application; a data frame reception unit that receives a data frame of a first communication protocol from a first communication bus conforming to the first communication protocol; a reception time protocol conversion unit that protocol-converts the data frame of the first communication protocol received by the data frame reception unit into a data frame of a second communication protocol; a protocol data unit extraction unit that extracts a protocol data unit of the first communication protocol from the data frame of the second communication protocol protocol-converted by the reception time protocol conversion unit; and a protocol data unit provision unit that provides the protocol data unit of the first communication protocol extracted by the protocol data unit extraction unit to an application.

The present invention has been made in view of the circumstances described above, and an object thereof is to provide an electronic control device, a data communication method, and a data communication program that can appropriately secure the degree of freedom in application development.

The object is solved by an electronic control device according to claim 1, by a data communication method according to claim 10 and by a data communication program according to claim 12.

According to the first aspect of the invention according to claim 1, a data frame reception unit is adapted to receive a data frame of a first communication protocol from a first communication bus conforming to the first communication protocol. A reception time protocol conversion unit is adapted to protocol-convert the data frame of the first communication protocol received by the data frame reception unit into a data frame of a second communication protocol. A protocol data unit extraction unit is adapted to extract a protocol data unit of the first communication protocol from the data frame of the second communication protocol protocol-converted by the reception time protocol conversion unit. A reception time protocol data unit accumulation unit is adapted to function as a FIFO buffer for the protocol data unit of the first communication protocol extracted by the protocol data unit extraction unit and accumulate the protocol data unit of the first communication protocol extracted by the protocol data unit extraction unit. A protocol data unit provision unit is adapted to provide the protocol data unit of the first communication protocol extracted by the protocol data unit extraction unit to an application. When a set identification filter instruction is notified from an application, a response to the notified set identification filter instruction is notified to the application, when the data frame of the second communication protocol is received from a first control unit, in a case where the set identification filter instruction has been notified from the application, it is checked whether an identification designated by the notified set identification filter instruction matches an identification stored in the received data frame of the second communication protocol. When the data frame of the second communication protocol storing the identification matching the identification designated by the notified set identification filter instruction is specified, the protocol data unit of the first communication protocol is extracted from the specified data frame of the second communication protocol, and the extracted protocol data unit is stored in the reception time protocol data unit accumulation unit. When a read instruction is notified from an application, the protocol data unit of the first communication protocol stored in the reception time protocol data unit accumulation unit is provided to the application.

When the data frame of the first communication protocol is received from the first communication bus, the received data frame of the first communication protocol is protocol-converted into the data frame of the second communication protocol. A protocol data unit of the first communication protocol is extracted from the protocol-converted data frame of the second communication protocol, and the extracted protocol data unit of the first communication protocol is provided to the application.

Even if the control unit for executing the application is not directly connected to the first communication bus, the protocol data unit stored in the data frame of the first communication protocol received from the first communication bus can be provided to the application, so that the application can handle data of the first communication protocol. As a result, application developer is not restricted by the connection form of the control unit for executing the application, and application developers can develop applications without considering differences in communication protocols. Thus, a sufficient degree of freedom for developing the application can be secured.

The above and other objects, features and advantages of the present disclosure will become more apparent from the following detailed description made with reference to the accompanying drawings. In the drawings:
FIG. 1 is a functional block diagram showing an embodiment;
FIG. 2 is a functional block diagram of a first control unit and CAN service;
FIG. 3 is a diagram showing a flow when CAN data is received;
FIG. 4 is a diagram showing the flow when the CAN data is transmitted;
FIG. 5 is a diagram for explaining protocol conversion;
FIG. 6 is a flowchart showing CAN data reception time processing;
FIG. 7 is a sequence diagram when receiving the CAN data;
FIG. 8 is a diagram showing a feature of accumulating CAN PDU when receiving the CAN data;
FIG. 9 is a diagram showing a feature of accumulating CAN PDU when receiving the CAN data;
FIG. 10 is a flowchart showing CAN data transmission time processing;
FIG. 11 is a sequence diagram when transmitting the CAN data;
FIG. 12 is a diagram showing a feature of accumulating CAN PDU when transmitting the CAN data; and
FIG. 13 is a diagram showing a feature of accumulating CAN PDU when transmitting the CAN data.

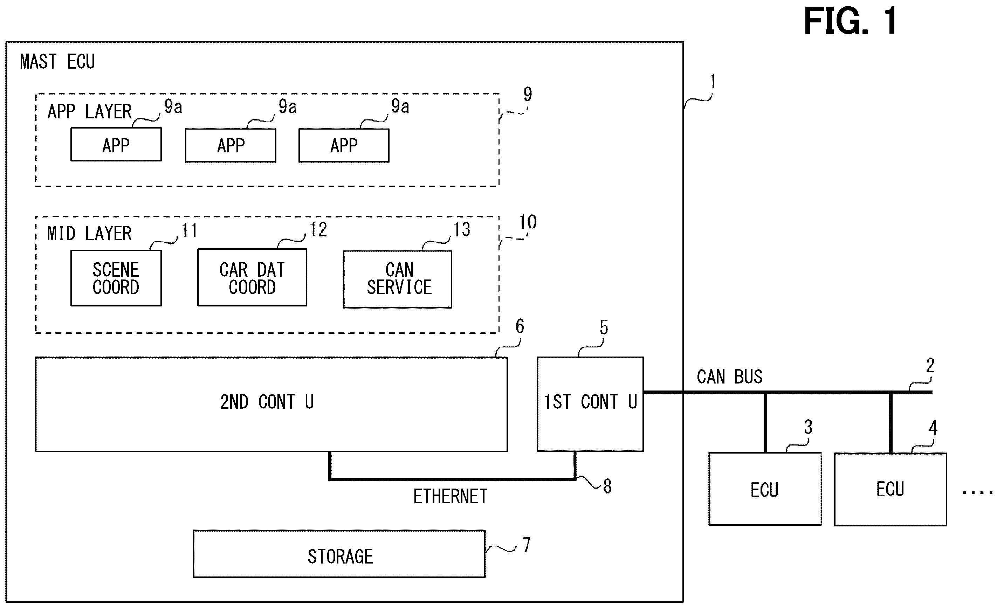

Hereinafter, one embodiment of the invention will be described with reference to the drawings. As shown in FIG. 1, a master ECU 1 (corresponding to an electronic control device) mounted on a vehicle and can acquire information from, for example, a power train ECU, a body ECU, a cockpit ECU, a chassis ECU, a safety ECU, and the like, or can instruct each ECU to control the vehicle. In order to realize this feature, the master ECU 1 includes multiple applications and multiple middleware. The master ECU 1 functions as an update master that manages the execution of reprogramming for the purpose of, for example, improving functions and recovering defects. The master ECU 1 is connected to a plurality of ECUs 3 and 4 that are not part of the invention via a CAN bus 2 (Controller Area Network bus, registered trademark, and corresponding to a first communication bus) so as to be capable of data communication, so that the master ECU 1 integrally can manage the plurality of ECUs 3, 4 by instructing an operation to the plurality of ECUs 3, 4 and acquiring operating states from the plurality of ECUs 3, 4. The number of ECUs that can be connected to the master ECU 1 via the CAN bus 2 may not be limited to two, but may be arbitrary. The plurality of ECUs 3 and 4 can be, for example, a power train ECU, a body ECU, a cockpit ECU, a chassis ECU, a safety ECU, and the like.

The master ECU 1 can be connected to a DCM (Data Communication Module) functioning as a data communication device which is not part of the invention. The DCM makes it possible to transmit and receive data by wirelessly connecting to the outside via a communication network. The master ECU 1 can identify a reprogramming target ECU that functions as a reprogramming target from among the plurality of ECUs, and can execute reprogramming by instructing the reprogramming target ECU 3 to write an update program therein. The master ECU 1 can be connected to a DCM (Data Communication Module) functioning as a data communication device which is not part of the invention. The DCM can be wirelessly connected to an OTA center via a communication network so that a distribution package transmitted from the OTA center can be received. When receiving the distribution package transmitted from the OTA center which is not part of the invention, the DCM can transmit the received distribution package to the master ECU 1. When the delivery package is transferred from the DCM, the master ECU 1 can extract the update program from the transferred delivery package and instruct the reprogram target ECU 3 to write the extracted update program, thereby executing the reprogramming.

The master ECU 1 includes a first control unit 5, a second control unit 6 (corresponding to a control unit), and a storage 7 which is not part of the invention. The first control unit 5 and the second control unit 6 each can include a microcomputer having a CPU (Central Processing Unit). The master ECU 1 can have a ROM (i.e., Read Only Memory), a RAM (i.e., Random Access Memory) and an I/O (i.e., Input/Output). The first control unit 5 and the second control unit 6 each execute a control program stored in a non-transitory tangible storage medium to execute processing corresponding to the control program, and control a whole of operations of the master ECU 1 in cooperation with each other. The control programs respectively executed by the first control unit 5 and the second control unit 6 include a part of the data communication program.

The first control unit 5 can be connected to the ECUs 3 and 4 via the CAN bus 2, and can perform data communication with the ECUs 3 and 4 according to the CAN protocol (corresponding to the first communication protocol). The first control unit 5 and the second control unit 6 are connected via an Ethernet 8 (corresponding to a second communication bus), and perform data communication with each other according to the Ethernet protocol (corresponding to a second communication protocol). That is, the first control unit 5 is directly connected to the CAN bus 2. The second control unit 6 is not directly connected to the CAN bus 2 but is connected to the CAN bus 2 via the Ethernet 8. Data communication by the Ethernet protocol is faster and has a larger capacity than data communication by the CAN protocol. The master ECU 1 is equipped with a plurality of CPUs. The first control unit 5 and the second control unit 6 correspond to multiple CPUs. In the hardware architecture of the master ECU 1, the first CPU is connected to the CAN bus 2 and is configured to directly access the CAN bus 2, and the second CPU is not connected to the CAN bus 2 and is configured not to directly access the CAN bus 2. Within the same board, the second CPU is connected to the first CPU via the Ethernet so as to be capable of data communication. Here, instead of a plurality of CPUs, virtual machines that implement the same functions by software may be used.

The storage 7 which is not part of the invention can be a nonvolatile memory mainly including, for example, a NOR flash memory or a NAND flash memory, and is shared by multiple applications executed by the first control unit 5 and the second control unit 6. That is, a plurality of applications can each access the storage 7 to write and read data. Although the configuration in which the storage 7 is built in the master ECU 1 is exemplified, it may be also possible to apply a configuration in which the storage 7 is arranged outside the master ECU 1. Further, although the configuration in which the storage 7 is shared by a plurality of applications executed by the first control unit 5 and the second control unit 6 is illustrated, the application executed by the control unit of another ECU connected to the master ECU 1 for data communication may share the storage 7.

Each application 9a belonging to the application layer 9 requests to transmit the information to any one of the scene coordinator 11, the car data coordinator 12, and the CAN service 13 belonging to the middleware layer 10 according to the granularity of the requested information when requesting the information about the vehicle. The scene coordinator 11, the car data coordinator 12, and the CAN service 13 each are set with application programming interfaces (APIs) so that information can be provided.

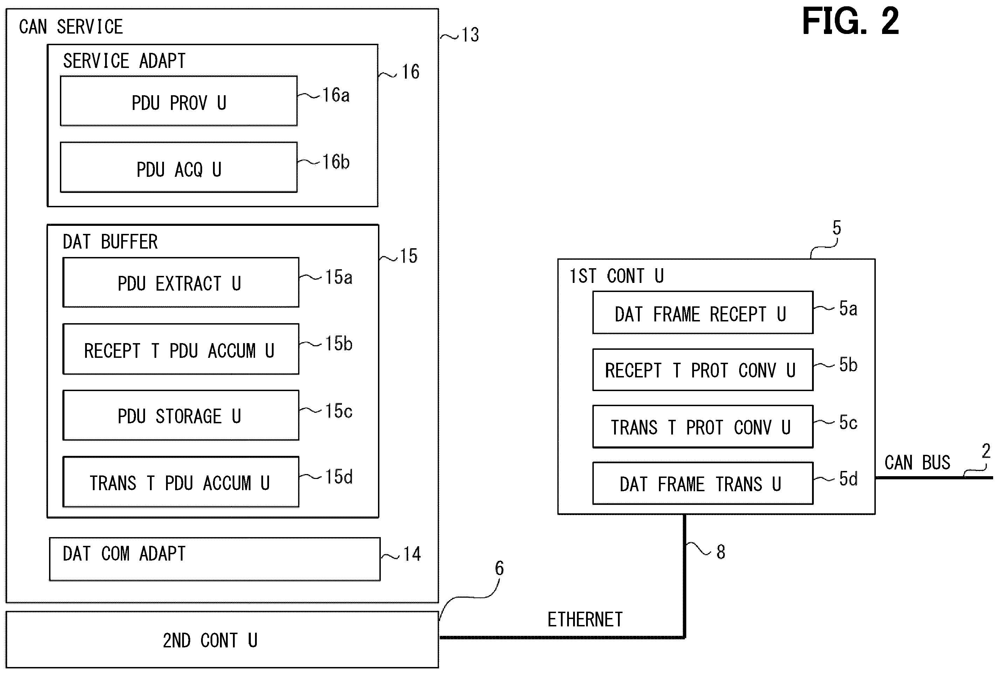

Since the first control unit 5 is directly connected to the CAN bus 2 as described above, it has a function of controlling transmission and reception of CAN frames (corresponding to data frames of the first communication protocol) including CAN data, which conforms to the CAN protocol. As shown in FIG. 2, the first control unit 5 includes a data frame reception unit 5a and a reception time protocol conversion unit 5b as functional blocks involved in receiving data from the CAN bus 2. The first control unit 5 can, as functional blocks involved in transmitting the CAN data to the CAN bus 2, preferably include a transmission time protocol conversion unit 5c and a data frame transmission unit 5d.

The CAN service 13 includes a data communication adapter 14, a data buffer 15 and a service adapter 16. The data communication adapter 14 controls transmission and reception of Ethernet frames (corresponding to data frames of the second communication protocol), which are data frames conforming to the Ethernet protocol.

The data buffer 15 includes a protocol data unit (hereinafter referred to as a PDU, Protocol Data Unit) extraction unit 15a and a reception time PDU accumulation unit 15b as functional blocks involved in receiving the CAN data from the first control unit 5. The data buffer 15 preferably includes a PDU storage unit 15c and a transmission time PDU accumulation unit 15d as functional blocks involved in transmitting the CAN data to the first control unit 5. The PDU is a unit of information that is transmitted and received, and includes a portion of control information defined by a communication protocol and a payload that is the content of data.

The service adapter 16 provides the application 9a with a CAN PDU including CAN data, which is data conforming to the CAN protocol, and acquires the CAN PDU from the application 9a. The service adapter 16 includes a PDU provision unit 16a as a functional block involved in receiving the CAN data from the first control unit 5. The service adapter 16 preferably includes a PDU acquisition unit 16b as a functional block involved in transmitting the CAN data to the first control unit 5.

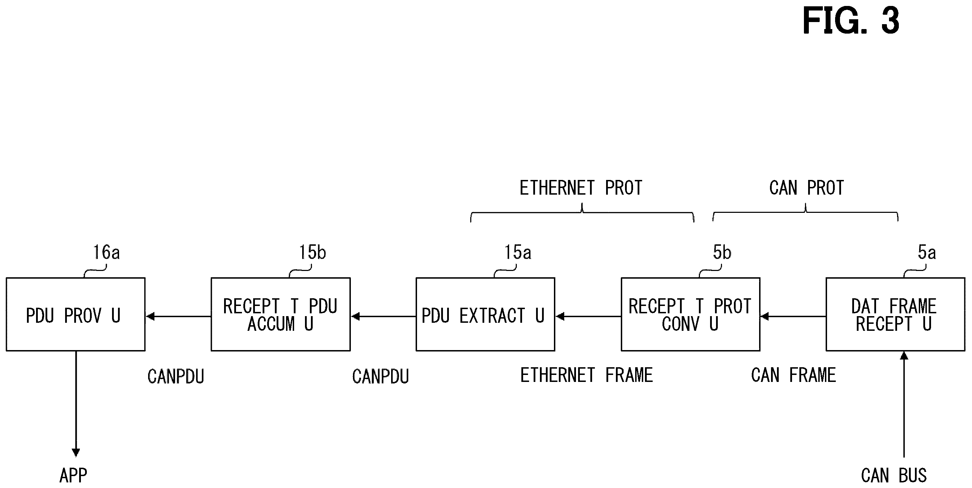

When the CAN data handled by the application 9a is received, the first control unit 5 and the CAN service 13 operate in cooperation with each other. As shown in FIG. 3, the data frame reception unit 5a, the reception time protocol conversion unit 5b, the PDU extraction unit 15a, the reception time PDU accumulation unit 15b, and the PDU provision unit 16a perform the following operations when receiving the CAN data. The data frame reception unit 5a receives the CAN frames from the CAN bus 2. The reception time protocol conversion unit 5b protocol-converts the CAN frame received by the data frame reception unit 5a into an Ethernet frame. The PDU extraction unit 15a extracts the CAN PDU from the Ethernet frame protocol-converted by the reception time protocol conversion unit 5b.

The reception time PDU accumulation unit 15b functions as a FIFO buffer for CAN PDUs extracted by the PDU extraction unit 15a, and accumulates the CAN PDUs extracted by the PDU extraction unit 15a. The PDU provision unit 16a provides the application 9a with the CAN PDUs accumulated by the reception time PDU accumulation unit 15b. In this case, since the reception time PDU accumulation unit 15b functions as a FIFO buffer, the PDU provision unit 16a provides the CAN PDUs accumulated by the reception time PDU accumulation unit 15b to the application 9a according to the order in which the CAN frames have been received from the CAN bus 2. That is, according to the order in which the CAN frames are received from the CAN bus 2, the CAN PDUs extracted from the received CAN frames are provided to the application 9a.

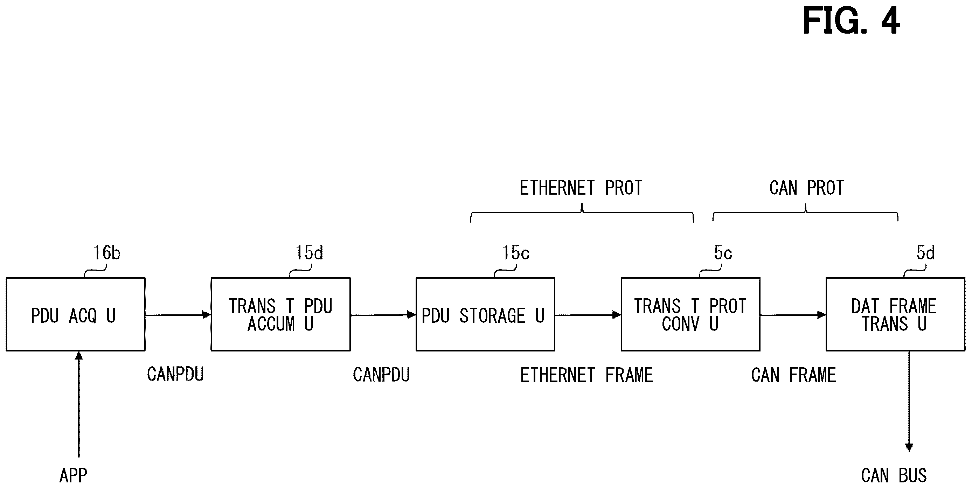

When the CAN data handled by the application 9a is transmitted, the first control unit 5 and the CAN service 13 can operate in cooperation with each other. As shown in FIG. 4, the PDU acquisition unit 16b, the transmission time PDU accumulation unit 15d, the PDU storage unit 15c, the transmission time protocol conversion unit 5c, and the data frame transmission unit 5d can preferably perform the following operations when transmitting the CAN data. The PDU acquisition unit 16b acquires the CAN PDU from the application 9a. The transmission time PDU accumulation unit 15d functions as a FIFO buffer for CAN PDUs acquired by the PDU acquisition unit 16b, and accumulates the CAN PDUs acquired by the PDU acquisition unit 16b. The PDU storage unit 15c stores the CAN PDUs accumulated by the transmission time PDU accumulation unit 15d in an Ethernet frame.

The transmission time protocol conversion unit 5c can preferably protocol-convert the Ethernet frame in which the CAN PDU is stored by the PDU storage unit 15c into a CAN frame. The data frame transmission unit 5d can preferably transmit to the CAN bus 2 the CAN frame protocol-converted by the transmission time protocol conversion unit 5c. In this case, since the transmission time PDU accumulation unit 15d functions as a FIFO buffer, the data frame transmission unit 5d can preferably transmit the CAN frames protocol-converted by the transmission time protocol conversion unit 5c to the CAN bus 2 according to the order in which the CAN PDUs have been acquired from the application 9a. That is, the CAN frame in which the acquired PDUs are stored can be preferably transmitted to the CAN bus 2 according to the order in which the CAN PDUs are acquired from the application 9a.

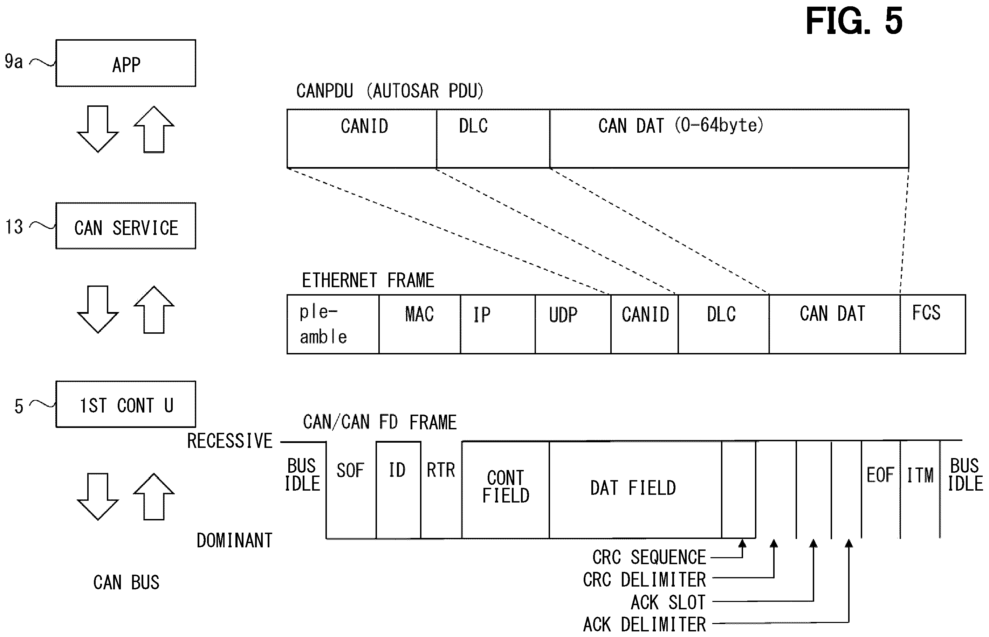

As shown in FIG. 5, when receiving the CAN data handled by the application 9a, the CAN frame received from the CAN bus 2 is protocol-converted into an Ethernet frame, and the CAN PDU extracted from the protocol-converted Ethernet frame is provided to the application 9a. When transmitting the CAN data handled by the application 9a, the Ethernet frame storing the CAN PDU can be preferably protocol-converted into a CAN frame, and the protocol-converted CAN frame is transmitted to the CAN bus 2. The ID, the control field, and the data field of the CAN frame correspond to a CANID, a DLC, and a CAN data of the Ethernet frame, respectively.

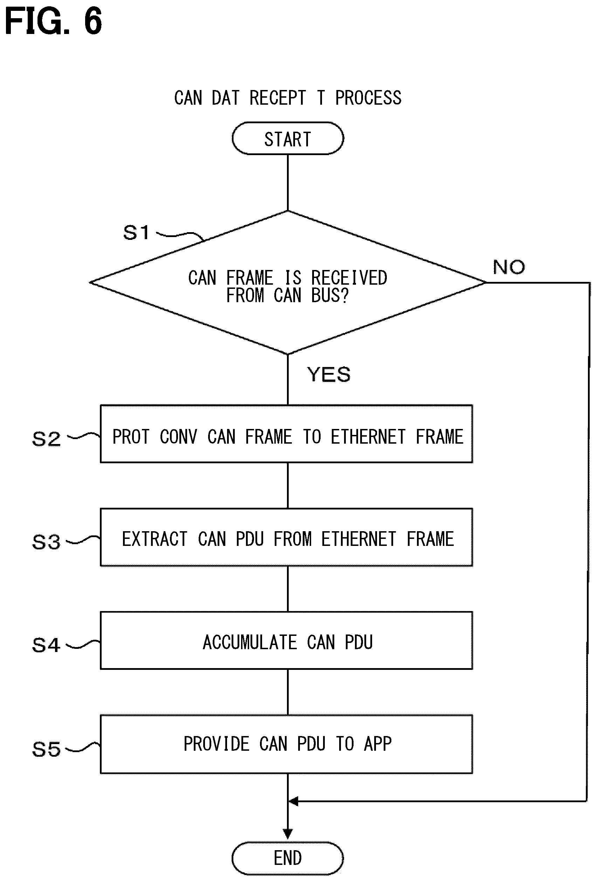

The following will describe an operation of the above configuration with reference to FIG. 6 to FIG. 13. A process performed by the master ECU 1 when receiving the CAN data and as a preferred embodiment a process when transmitting the CAN data will be described.

### (1) Processing when receiving CAN data (see FIGS. 6 to 9) according to the invention

When the master ECU 1 starts the CAN data reception time process, the master ECU 1 determines whether or not the first control unit 5 has received a CAN frame from the CAN bus 2. When the master ECU 1 determines that the first control unit 5 has received a CAN frame from the CAN bus 2 (at S1, which corresponds to a data frame reception procedure), it protocol-converts the received CAN frame into an Ethernet frame (at S2, which corresponds to a reception time protocol conversion procedure). The master ECU 1 extracts CAN PDU from the protocol-converted Ethernet frame using the CAN service 13 (at S3, corresponding to a PDU extraction procedure), and accumulates the extracted CAN PDU (at S4, corresponding to a reception time PDU extraction procedure). The master ECU 1 provides the accumulated CAN PDU to the application 9a (at S5, which corresponds to a PDU extraction procedure), and terminates the CAN data reception time process.

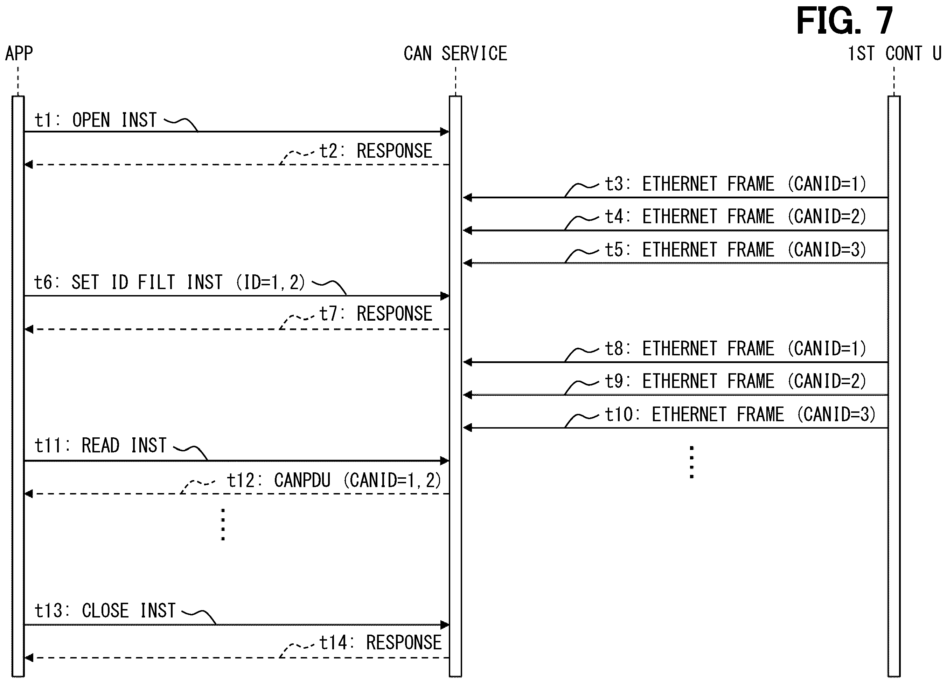

In this case, the CAN service 13 performs the processing shown in FIG. 7. When the application 9a notifies the CAN service 13 of the open instruction (at t1), the CAN service 13 notifies the application 9a of a response to the notified open instruction (at t2), and creates a temporary data storage area in the reception time PDU accumulation unit 15b for the application 9a as a notification source of the open instruction. When the CAN service 13 receives an Ethernet frame from the first control unit 5 (at t3 to t5), the CAN service 13 discards the received Ethernet frame if no set ID filter instruction is notified from application 9a.

When notified of the set ID filter instruction from the application 9a (at t6), the CAN service 13 notifies the application 9a of a response to the notified set ID filter instruction (at t7). When the CAN service 13 receives the Ethernet frame from the first control unit 5 (at t8 to t10), if the set ID filter instruction is notified from the application 9a, the CAN server 13 checks the ID specified by the notified set ID filter instruction with the CANID stored in the received Ethernet frame. When the CAN service 13 specifies an Ethernet frame storing a CANID that matches the ID designated by the notified set ID filter instruction, it extracts a CAN PDU from the specified Ethernet frame, and stores the extracted CAN PDU in the data storage area. When the CAN service 13 specifies an Ethernet frame storing a CANID that does not match the ID specified by the notified set ID filter instruction, it discards the Ethernet frame from the specified Ethernet frame without extracting the CAN PDU. When the application 9a notifies the CAN service 13 of the read instruction (at t11), the CAN service 13 provides the CAN PDU stored in the data storage area to the application 9a (at t12).

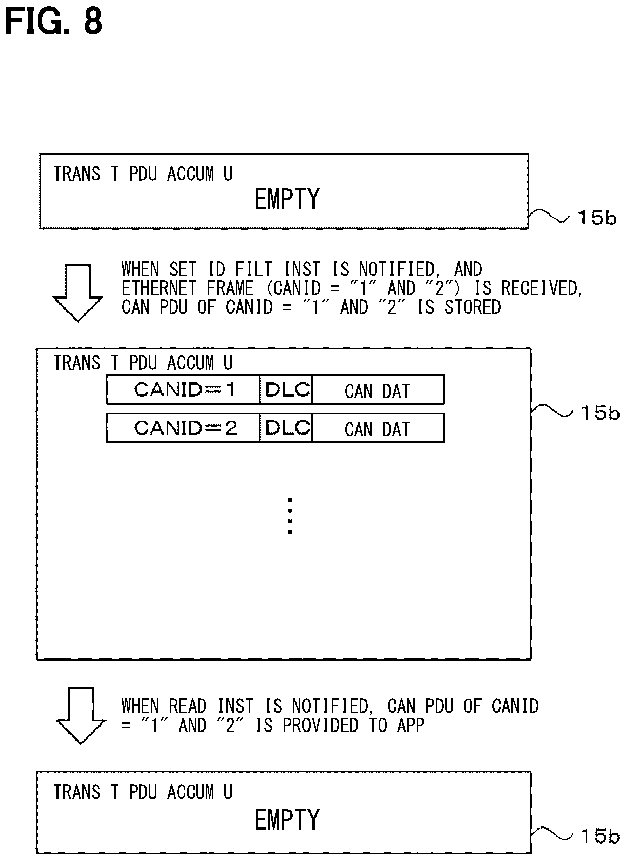

In the example of FIG. 7, the CAN service 13 provides the CAN PDUs with CANID = "1" and "2" to the application 9a when the CAN PDUs with CANID = "1" and "2" is stored in the data storage area and the read instruction is notified from the application 9a since the ID = "1" and "2" are specified in the set ID filter instruction notified from the application 9a. In this case, as shown in FIG. 8, when the CAN service 13 provides the CAN PDUs with CANID = "1" and "2" to the application 9a, the CAN service 13 sets the data storage area in the reception time PDU accumulation unit 15b to be in an empty state. The CAN service 13 repeats the processing described above.

When the CAN service 13 receives an Ethernet frame multiple times from the first control unit 5 before being notified of the read instruction from the application 9a after being notified of the set ID filter instruction from the application 9a, the CAN service 13 extracts the CAN PDUs sequentially from Ethernet frames storing the CAN IDs that match the IDs specified by the notified set ID filter instruction, and sequentially stores the extracted CAN PDUs in the data storage area.

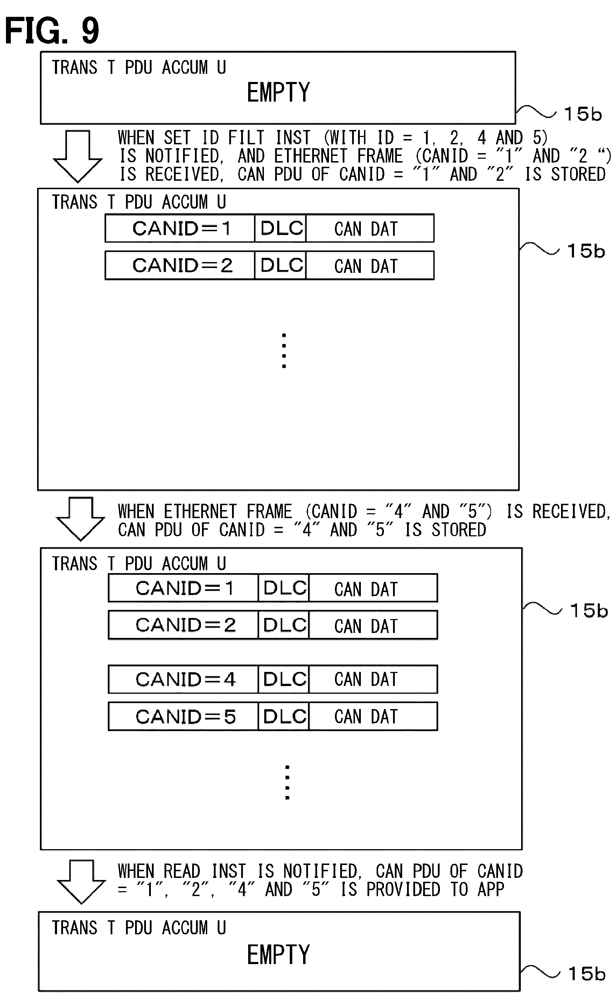

In the example of FIG. 9, the CAN service 13 stores the CAN PDU with the CANID = "1" and "2" in the data storage area when receiving the Ethernet frame storing the CANID = "1" and "2" from the first control unit 5, and successively, when receiving the Ethernet frame storing the CANID = "4" and "5" from the first control unit 5, the CAN service 13 stores the CAN PDU with the CANID = "4" and "5" in the data storage area since the ID = "1", "2", "4", and "5" is specified in the set ID filter instruction notified from the application 9a.

When the CAN service 13 is notified of the close instruction from the application 9a (at t13), the CAN service 13 notifies the application 9a of a response to the notified close instruction (at t14), and deletes the temporary data storage area created in the reception time PDU accumulation unit 15b. By the above-described processing, the CAN PDU stored in the CAN frame received from the CAN bus 2 can be provided to the application 9a, and the application 9a can handle the CAN data.

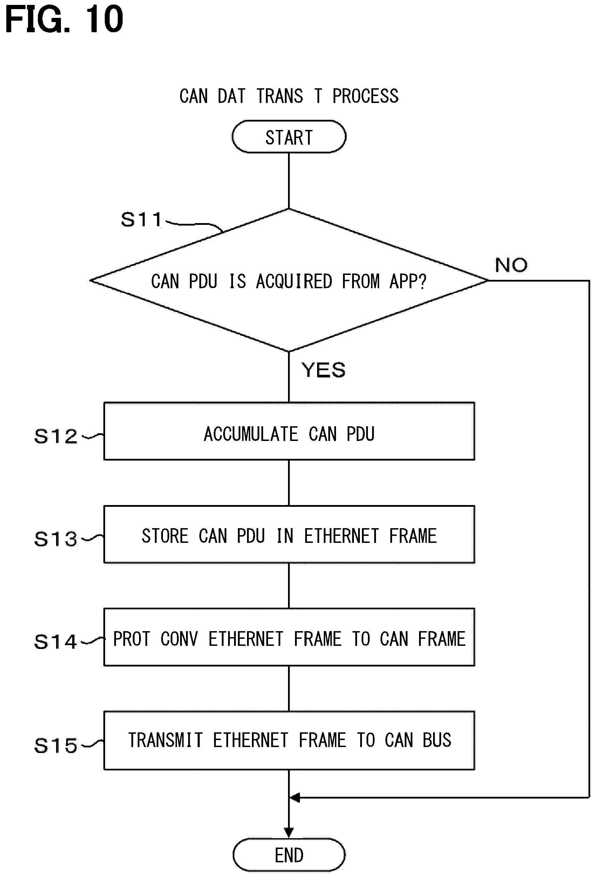

### (1) Processing when transmitting CAN data (see FIGS. 10 to 13) according to the preferred embodiment of the invention

When the master ECU 1 starts the CAN data transmission time process, the master ECU 1 can determine whether or not the CAN PDU is obtained from the application 9a by the CAN service 13 (at S11). When the master ECU 1 determines that the CAN PDU has been acquired from the application 9a by the CAN service 13 ("YES" at S11, corresponding to the PDU acquisition procedure), it can accumulate the acquired CAN PDU (at S12, corresponding to the transmission time PDU accumulation procedure). The master ECU 1 can store the accumulated CAN PDU in an Ethernet frame (at S13, corresponding to a PDU storage procedure), and can protocol-convert the Ethernet frame storing the CAN PDU into a CAN frame (at S14, corresponding to a transmission time protocol conversion procedure). The master ECU 1 can transmit the converted CAN frame to the CAN bus 2 (at S15, corresponding to the data frame transmission procedure), and can terminate the CAN data transmission time process.

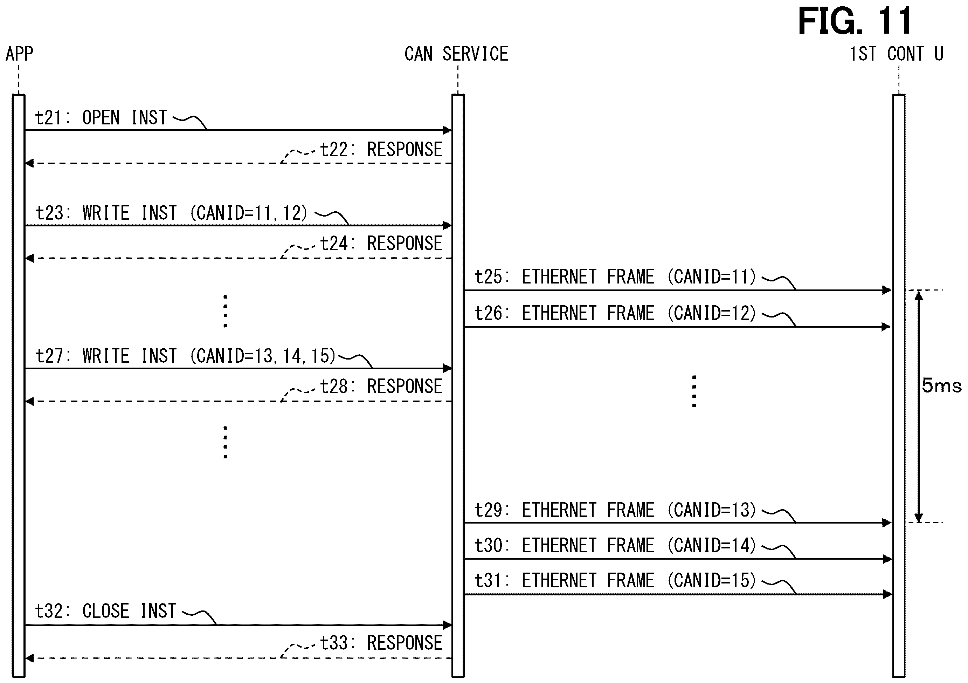

In this case, the CAN service 13 performs the processing shown in FIG. 11. When the application 9a notifies the CAN service 13 of the open instruction (at t21), the CAN service 13 can notify the application 9a of a response to the notified open instruction (at t22), and can create a temporary data storage area in the xxxtransmission time PDU accumulation unit 15dy(einheitlich)yy for the application 9a as a notification source of the open instruction. When the CAN service 13 is notified of the write instruction from the application 9a (at t23), the CAN service 13 can notify the application 9a of a response to the notified write instruction (at t24), can acquire the CAN PDU from the application 9a, and can store the acquired CAN PDU to the application 9a in the data storage area.

The CAN service 13 can monitor a predetermined transmission cycle of Ethernet frames (for example, a cycle of 5 milliseconds). When the CAN PDU is stored at the time when the transmission timing of the Ethernet frame is reached, the CAN service 13 can store the stored CAN PDU in the Ethernet frame, and can transmit the Ethernet frame storing the CAN PDU to the first control unit 5 (at t25 and t26), and can wait for the transmission timing of the next Ethernet frame. The CAN service 13 can wait for the transmission timing of the next Ethernet frame if the CAN PDU has not been stored when the transmission timing of the Ethernet frame is reached.

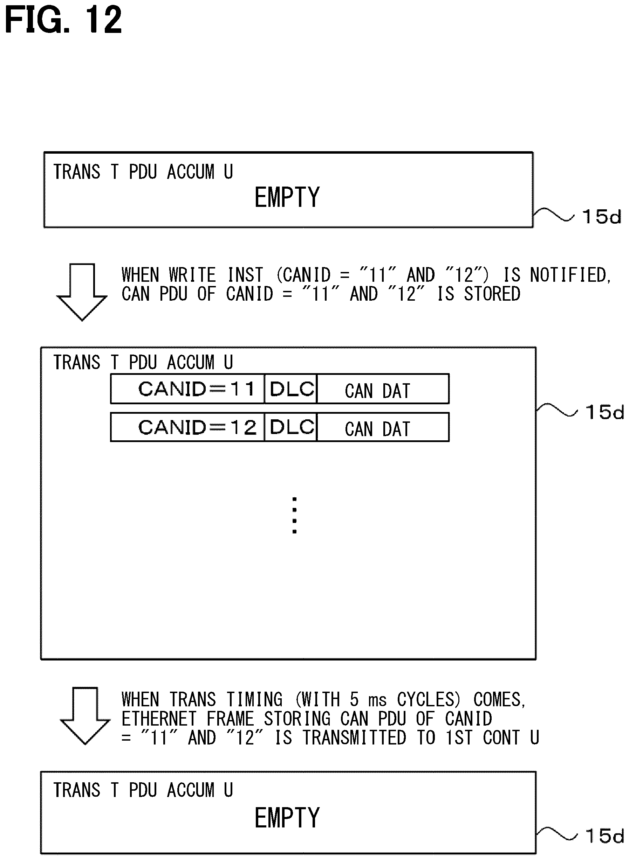

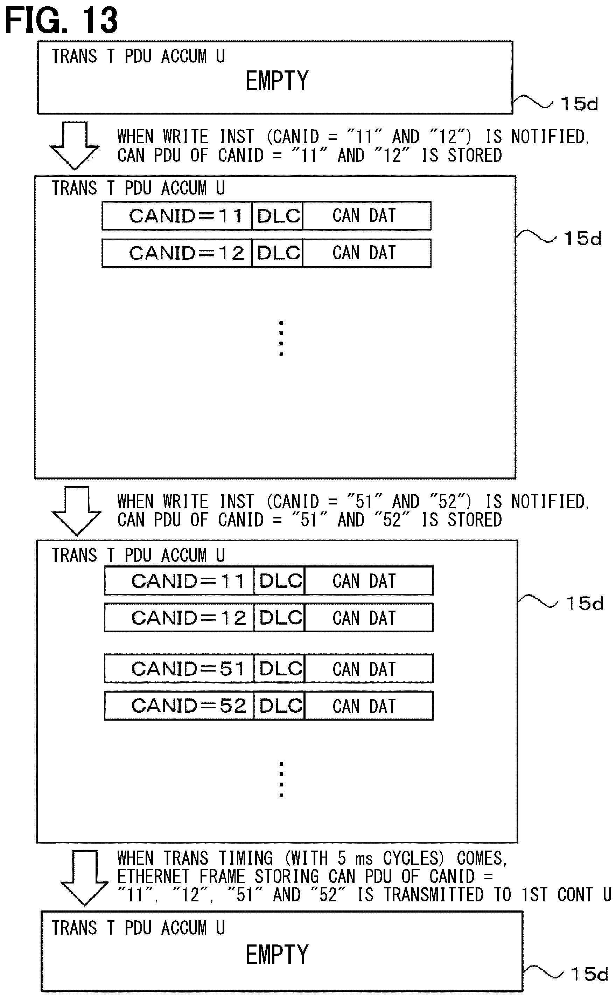

In the example of FIG. 12, since the CAN service 13 is notified of the write instruction from the application 9a, and acquires the CAN PDU with CANID = "11" and "12", the CAN service 13 can store the acquired CANID = "11" and "12" in the data storage area, and when the transmission timing of the Ethernet frame is reached, the CAN service 13 can transmit the Ethernet frame storing the CAN PDU to the first control unit 5. In this case, as shown in FIG. 13, when the CAN service 13 transmits an Ethernet frame storing the CAN PDU with CANID = "11" and "12" to the first control unit 5, the CAN service 13 can set the data storage area in the transmission time PDU accumulation unit 15d to be in an empty state. The CAN service 13 can repeat the above process (at t27 to t31).

Note that when the CAN service 13 is notified of the write instruction multiple times from the application 9a before reaching the transmission timing of the next Ethernet frame after reaching the transmission timing of the Ethernet frame, it sequentially can acquire CAN PDUs from the application 9a, and then, store the acquired CAN PDU sequentially in the data storage area.

In the example of FIG. 13, the CAN service 13 can store the CAN PDU with CANID = "11" and "12" in the data storage area, and then store the CAN PDU with CANID = "51" and "52" in the data storage area, and, when it reaches the transmission timing of the Ethernet frame, the CAN service 13 can transmit to the first control unit 5 the Ethernet frame storing the CAN PDUs of CANID = "11", "12", "51" and "52".

When the CAN service 13 is notified of the close instruction from the application 9a (at t32), the CAN service 13 can notify the application 9a of a response to the notified close instruction (at t33), and delete the temporary data storage area created in the transmission time PDU accumulation unit 15d. By the above-described processing, the CAN frame storing the CAN PDU with the CAN data can be transmitted to the CAN bus 2, and the application 9a can handle the CAN data.

As described above, according to the present embodiment, the following actions and effects can be achieved.

When the master ECU 1 receives a CAN frame from the CAN bus 2, it protocol-converts the received CAN frame into an Ethernet frame, extracts CAN PDU from the protocol-converted Ethernet frame, and provides the extracted CAN PDU to the application.

Even if the second control unit 6 that executes the application 9a is not directly connected to the CAN bus 2, the CAN PDU stored in the CAN frame received from the CAN bus 2 can be provided to the application 9a, so that the application 9a can handle the CAN data. As a result, application developer is not restricted by the connection form of the control unit for executing the application, and application developers can develop applications without considering differences in communication protocols. Thus, a sufficient degree of freedom for developing the application can be secured. That is, the application developer of the application 9a does not need to consider which of the first control unit 5 and the second control unit 6 executes the application 9a.

In the preferred embodiment, when the CAN PDU is acquired from the application 9a, the master ECU 1 stores the acquired CAN PDU in an Ethernet frame, protocol-converts the Ethernet frame storing the CAN PDU into a CAN frame, and transmits the protocol-converted CAN frame to the CAN bus 2.

Even if the second control unit 6 that executes the application 9a is not directly connected to the CAN bus 2, it is possible to transmit the CAN frame storing the CAN data to be handled by the application 9a to the CAN bus 2. As a result, an application developer can develop applications without considering differences in communication protocols not only for the CAN data to be received from the CAN bus 2 but also for the CAN data to be transmitted to the CAN bus 2, so that a sufficient degree of freedom in the development of application can be ensured.

Since the master ECU 1 is provided with a configuration that functions as a FIFO buffer for the CAN PDUs when receiving the CAN data, the master ECU 1 can properly provide the CAN PDUs stored in the received CAN frames to the application 9a according to the order in which the CAN frames are received from the CAN bus 2.

Since in the preferred embodiment the master ECU 1 is provided with a configuration that functions as a FIFO buffer for the CAN PDUs when transmitting the CAN data, the master ECU 1 can transmit the CAN frames obtained by protocol-converting Ethernet frames to the CAN bus 2 according to the order in which the CAN PDUs are acquired from the application 9a.

In the above, the configuration is exemplified such that the CAN bus 2 and the Ethernet 8 are used as the communication buses, and the protocol conversion between the CAN frame and the Ethernet frame is performed. Alternatively, LIN, CXPI (i.e., Clock Extension Peripheral Interface, registered trademark), FLEXRAY (registered trademark), MOST (Media Oriented Systems Transport, registered trademark), and the like may be employed as the communication protocol.

The control unit and the method according to the present disclosure may be achieved by a dedicated computer provided by constituting a processor and a memory programmed to execute one or more functions embodied by a computer program. Alternatively, the controller and the method thereof described in the present disclosure may be implemented by a dedicated computer provided by configuring a processor with one or more dedicated hardware logic circuits. Alternatively, the control unit and the method thereof described in the present disclosure may be implemented by one or more dedicated computers configured by a combination of a processor and a memory programmed to execute one or more functions and a processor configured by one or more hardware logic circuits. The computer program may be stored in a computer-readable non-transitional tangible recording medium as an instruction to be executed by the computer.

It is noted that a flowchart or the processing of the flowchart in the present application includes sections (also referred to as steps), each of which is represented, for instance, as S1. Further, each section can be divided into several sub-sections while several sections can be combined into a single section. Furthermore, each of thus configured sections can be also referred to as a device, module, or means.

## Claims

1. An electronic control device (1) comprising:
a control unit (6) that is adapted to execute an application;
a data frame reception unit (5a) that is adapted to receive a data frame of a first communication protocol from a first communication bus conforming to the first communication protocol;
a reception time protocol conversion unit (5b) that is adapted to protocol-convert the data frame of the first communication protocol received by the data frame reception unit (5a) into a data frame of a second communication protocol;
a protocol data unit extraction unit (15a) that is adapted to extract a protocol data unit of the first communication protocol from the data frame of the second communication protocol protocol-converted by the reception time protocol conversion unit (5b);
a reception time protocol data unit accumulation unit (15b) that is adapted to function as a FIFO buffer for the protocol data unit of the first communication protocol extracted by the protocol data unit extraction unit (15a) and accumulate the protocol data unit of the first communication protocol extracted by the protocol data unit extraction unit (15a); and
a protocol data unit provision unit (16a) that is adapted to provide the protocol data unit of the first communication protocol extracted by the protocol data unit extraction unit (15a) to an application,
**characterized in that**:
when a set identification filter instruction is notified from an application, a response to the notified set identification filter instruction is notified to the application,
when the data frame of the second communication protocol is received from a first control unit, in a case where the set identification filter instruction has been notified from the application, it is checked whether an identification designated by the notified set identification filter instruction matches an identification stored in the received data frame of the second communication protocol;
when the data frame of the second communication protocol storing the identification matching the identification designated by the notified set identification filter instruction is specified, the protocol data unit of the first communication protocol is extracted from the specified data frame of the second communication protocol, and the extracted protocol data unit is stored in the reception time protocol data unit accumulation unit (15b); and
when a read instruction is notified from an application, the protocol data unit of the first communication protocol stored in the reception time protocol data unit accumulation unit is provided to the application.

2. The electronic control device (1) according to claim 1, further comprising:
a protocol data unit acquisition unit (16b) that is adapted to acquire the protocol data unit of the first communication protocol from the application;
a protocol data unit storage unit (15c) that is adapted to store the protocol data unit of the first communication protocol acquired by the protocol data unit acquisition unit (16b) in the data frame of the second communication protocol;
a transmission time protocol conversion unit (5c) that is adapted to protocol-convert the data frame of the second communication protocol, in which the protocol data unit of the first communication protocol is stored by the protocol data unit storage unit, into the data frame of the first communication protocol; and
a data frame transmission unit (5d) that is adapted to transmit the data frame of the first communication protocol, which is protocol-converted by the transmission time protocol conversion unit (5c), to the first communication bus.

3. The electronic control device (1) according to claim 1, wherein:
the protocol data unit provision unit (16a) is adapted to provide the protocol data unit of the first communication protocol, which is accumulated by the reception time protocol data unit accumulation unit (15b), to the application.

4. The electronic control device (1) according to claim 2, further comprising:
a transmission time protocol data unit accumulation unit (15d) that is adapted to accumulate the protocol data unit of the first communication protocol acquired by the protocol data unit acquisition unit (16b), wherein:
the protocol data unit storage unit (15c) is adapted to store the protocol data unit of the first communication protocol, which is accumulated by the transmission time protocol data unit accumulation unit (15d), in the data frame of the second communication protocol.

5. The electronic control device (1) according to claim 1, wherein:
the protocol data unit provision unit (16a) is adapted to provide the protocol data unit of the first communication protocol, which is extracted by the protocol data unit extraction unit (15a), to the application according to an order in which the data frame of the first communication protocol is received by the data frame reception unit (5a) from the first communication bus.

6. The electronic control device (1) according to claim 2, wherein:
the data frame transmission unit (5d) is adapted to transmit the data frame of the first communication protocol, which is protocol-converted by the transmission time protocol conversion unit (5c), to the first communication bus according to an order in which the protocol data unit of the first communication protocol is acquired by the protocol data unit acquisition unit (16b) from the application.

7. The electronic control device (1) according to claim 1, wherein:
the reception time protocol conversion unit (5b) is disposed in the first control unit,
the protocol data unit extraction unit (15a) and the protocol data unit provision unit (16a) are disposed in the second control unit, and
the first control unit and the second control unit are adapted to perform data communication using the second communication protocol.

8. The electronic control device (1) according to claim 2, wherein:
the protocol data unit acquisition unit (16b) and the protocol data unit storage unit (15c) are disposed in the second control unit,
the transmission time protocol conversion unit (5c) is disposed in the first control unit, and
the first control unit and the second control unit are adapted to perform data communication using the second communication protocol.

9. The electronic control device (1) according to any one of claims 1 to 8, further comprising:
one or more processors, wherein:
the one or more processors provides at least one of: the data frame reception unit (5a); the reception time protocol conversion unit (5b); the protocol data unit extraction unit (15a); and the protocol data unit provision unit (16a).

10. A data communication method for an electronic control device (1) including a control unit (6) that is adapted to execute an application, the data communication method comprising:
a data frame reception procedure (S1) for receiving a data frame of a first communication protocol from a first communication bus conforming to the first communication protocol;
a reception time protocol conversion procedure (S2) for protocol-converting the data frame of the first communication protocol received in the data frame reception procedure (S1) into a data frame of a second communication protocol;
a protocol data unit extraction procedure (S3) for extracting a protocol data unit of the first communication protocol from the data frame of the second communication protocol protocol-converted in the reception time protocol conversion procedure (S2);
a reception time protocol data unit accumulation procedure (S4) that functions as a FIFO buffer for the protocol data unit of the first communication protocol extracted by the protocol data unit extraction procedure (S3) and accumulates the protocol data unit of the first communication protocol extracted by the protocol data unit extraction procedure (S3); and
and a protocol data unit provision procedure (S5) for providing the protocol data unit of the first communication protocol extracted by the protocol data unit extraction procedure (S3) to an application,
**characterized in that**:
when set identification filter instruction is notified from an application, a response to the notified set identification filter instruction is notified to the application,
when the data frame of the second communication protocol is received from a first control procedure, in a case where the set identification filter instruction has been notified from the application, it is checked whether an identification designated by the notified identification filter instruction matches an identification stored in the received data frame of the second communication protocol;
when the data frame of the second communication protocol storing the identification matching the identification designated by the notified set identification filter instruction is specified, the protocol data unit of the first communication protocol is extracted from the specified data frame of the second communication protocol, and the extracted protocol data unit is stored in the reception time protocol data unit accumulation procedure (S4); and
when a read instruction is notified from an application, the protocol data unit of the first communication protocol stored in the reception time protocol data unit accumulation procedure (S4) is provided to the application.

11. The data communication method according to claim 10, further comprising:
a protocol data unit acquisition procedure for acquiring the protocol data unit of the first communication protocol from the application;
a protocol data unit storage procedure for storing the protocol data unit of the first communication protocol acquired in the protocol data unit acquisition procedure in the data frame of the second communication protocol;
a transmission time protocol conversion procedure for protocol-converting the data frame of the second communication protocol, in which the protocol data of the first communication protocol is stored in the protocol data unit storage procedure, into the data frame of the first communication protocol; and
a data frame transmission procedure for transmitting the data frame of the first communication protocol protocol-converted in the transmission time protocol conversion procedure to the first communication bus.

12. A data communication program causing an electronic control device (1), including a control unit (6) including a processor adapted to execute the data communication program, the execution leading to an application comprising:
a data frame reception procedure (S1) for receiving a data frame of a first communication protocol from a first communication bus conforming to the first communication protocol;
a reception time protocol conversion procedure (S2) for protocol-converting the data frame of the first communication protocol received in the data frame reception procedure (S1) into a data frame of a second communication protocol;
a protocol data unit extraction procedure (S3) for extracting a protocol data unit of the first communication protocol from the data frame of the second communication protocol protocol-converted in the reception time protocol conversion procedure (S2);
a reception time protocol data unit accumulation procedure (S4) that functions as a FIFO buffer for the protocol data unit of the first communication protocol extracted by the protocol data unit extraction procedure (S3) and accumulates the protocol data unit of the first communication protocol extracted by the protocol data unit extraction procedure (S3); and
and a protocol data unit provision procedure (S5) for providing the protocol data unit of the first communication protocol extracted by the protocol data unit extraction procedure (S3) to an application,
**characterized in that**:
when a set identification filter instruction is notified from an application, a response to the notified set identification filter instruction is notified to the application,
when the data frame of the second communication protocol is received from a first control procedure, in a case where the set identification filter instruction has been notified from the application, it is checked whether an identification designated by the notified set identification filter instruction matches an identification stored in the received data frame of the second communication protocol;
when the data frame of the second communication protocol storing the identification matching the identification designated by the notified set identification filter instruction is specified, the protocol data unit of the first communication protocol is extracted from the specified data frame of the second communication protocol, and the extracted protocol data unit is stored in the reception time protocol data unit accumulation procedure (S4); and
when a read instruction is notified from an application, the protocol data unit of the first communication protocol stored in the reception time protocol data unit accumulation procedure (S4) is provided to the application.

13. The data communication program according to claim 12, further causing the electronic control device (1) to execute:
a protocol data unit acquisition procedure for acquiring the protocol data unit of the first communication protocol from the application;
a protocol data unit storage procedure for storing the protocol data unit of the first communication protocol acquired in the protocol data unit acquisition procedure in the data frame of the second communication protocol;
a transmission time protocol conversion procedure for protocol-converting the data frame of the second communication protocol, in which the protocol data of the first communication protocol is stored in the protocol data unit storage procedure, into the data frame of the first communication protocol; and
a data frame transmission procedure for transmitting the data frame of the first communication protocol, protocol-converted in the transmission protocol conversion procedure, to the first communication bus.

## Patentansprüche

1. Elektronische Steuervorrichtung (1), aufweisend:
eine Steuereinheit (6), die dazu eingerichtet ist, um eine Anwendung auszuführen;
eine Datenrahmenempfangseinheit (5a), die dazu eingerichtet ist, einen Datenrahmen eines ersten Kommunikationsprotokolls von einem ersten Kommunikationsbus zu empfangen, der konform mit dem ersten Kommunikationsprotokoll ist;
eine Empfangszeitprotokollumwandlungseinheit (5b), die dazu eingerichtet ist, den Datenrahmen des ersten Kommunikationsprotokolls, der von der Datenrahmenempfangseinheit (5a) empfangen wird, in einen Datenrahmen eines zweiten Kommunikationsprotokolls protokollmäßig umzuwandeln;
eine Protokolldateneinheitextraktionseinheit (15a), die dazu eingerichtet ist, eine Protokolldateneinheit des ersten Kommunikationsprotokolls aus dem Datenrahmen des zweiten Kommunikationsprotokolls zu extrahieren, der von der Empfangszeitprotokollumwandlungseinheit (5b) protokollmäßig umgewandelt wurde;
eine Empfangszeitprotokolldateneinheitakkumulationseinheit (15b), die dazu eingerichtet ist, als ein FIFO-Puffer für die Protokolldateneinheit des ersten Kommunikationsprotokolls zu fungieren, die durch die Protokolldateneinheitextraktionseinheit (15a) extrahiert wird, und die Protokolldateneinheit des ersten Kommunikationsprotokolls zu akkumulieren, die durch die Protokolldateneinheitextraktionseinheit (15a) extrahiert wird; und
eine Protokolldateneinheitbereitstellungseinheit (16a), die dazu eingerichtet ist, die Protokolldateneinheit des ersten Kommunikationsprotokolls, die durch die Protokolldateneinheitextraktionseinheit (15a) extrahiert wird, einer Anwendung bereitzustellen,
**dadurch gekennzeichnet, dass**:
wenn eine festgelegte Identifikationsfilteranweisung von einer Anwendung mitgeteilt wird, eine Antwort auf die mitgeteilte festgelegte Identifikationsfilteranweisung der Anwendung mitgeteilt wird,
wenn der Datenrahmen des zweiten Kommunikationsprotokolls von einer ersten Steuereinheit empfangen wird, in einem Fall, in dem die festgelegte Identifikationsfilteranweisung von der Anwendung mitgeteilt wurde, überprüft wird, ob eine Identifikation, die durch die mitgeteilte festgelegte Identifikationsfilteranweisung bestimmt wird, mit einer Identifikation übereinstimmt, die in dem empfangenen Datenrahmen des zweiten Kommunikationsprotokolls gespeichert ist;
wenn der Datenrahmen des zweiten Kommunikationsprotokolls, der die Identifikation speichert, die mit der Identifikation übereinstimmt, die durch die mitgeteilte festgelegte Identifikationsfilteranweisung bestimmt wird, spezifiziert wird, die Protokolldateneinheit des ersten Kommunikationsprotokolls aus dem spezifizierten Datenrahmen des zweiten Kommunikationsprotokolls extrahiert wird und die extrahierte Protokolldateneinheit in der Empfangszeitprotokolldateneinheitakkumulationseinheit (15b) gespeichert wird; und
wenn eine Leseanweisung von einer Anwendung mitgeteilt wird, die Protokolldateneinheit des ersten Kommunikationsprotokolls, die in der Empfangszeitprotokolldateneinheitakkumulationseinheit gespeichert ist, der Anwendung bereitgestellt wird.

2. Elektronische Steuervorrichtung (1) gemäß Anspruch 1, ferner aufweisend:
eine Protokolldateneinheiterlangungseinheit (16b), die dazu eingerichtet ist, um die Protokolldateneinheit des ersten Kommunikationsprotokolls von der Anwendung zu erlangen;
eine Protokolldateneinheitsspeichereinheit (15c), die dazu eingerichtet ist, um die Protokolldateneinheit des ersten Kommunikationsprotokolls, die durch die Protokolldateneinheiterlangungseinheit (16b) erlangt wird, in dem Datenrahmen des zweiten Kommunikationsprotokolls zu speichern;
eine Übertragungszeitprotokollumwandlungseinheit (5c), die dazu eingerichtet ist, den Datenrahmen des zweiten Kommunikationsprotokolls, in dem die Protokolldateneinheit des ersten Kommunikationsprotokolls durch die Protokolldateneinheitsspeichereinheit gespeichert ist, in den Datenrahmen des ersten Kommunikationsprotokolls protokollmäßig umzuwandeln; und
eine Datenrahmensendeeinheit (5d), die dazu eingerichtet ist, den Datenrahmen des ersten Kommunikationsprotokolls, der durch die Übertragungszeitprotokollumwandlungseinheit (5c) protokollmäßig umgewandelt wird , an den ersten Kommunikationsbus zu übertragen.

3. Elektronische Steuervorrichtung (1) gemäß Anspruch 1, wobei:
die Protokolldateneinheitbereitstellungseinheit (16a) dazu eingerichtet ist, die Protokolldateneinheit des ersten Kommunikationsprotokolls, die durch die Empfangszeitprotokolldateneinheitakkumulationseinheit (15b) akkumuliert wird, der Anwendung bereitzustellen.

4. Elektronische Steuervorrichtung (1) gemäß Anspruch 2, ferner aufweisend:
eine Übertragungszeitprotokolldateneinheitakkumulationseinheit (15d), die dazu eingerichtet ist, die Protokolldateneinheit des ersten Kommunikationsprotokolls zu akkumulieren, die durch die Protokolldateneinheiterlangungseinheit (16b) erlangt wird, wobei:
die Protokolldateneinheitsspeichereinheit (15c) dazu eingerichtet ist, die Protokolldateneinheit des ersten Kommunikationsprotokolls, die durch die Übertragungszeitprotokolldateneinheitakkumulationseinheit (15d) akkumuliert wird, in dem Datenrahmen des zweiten Kommunikationsprotokolls zu speichern.

5. Elektronische Steuervorrichtung (1) gemäß Anspruch 1, wobei:
die Protokolldateneinheitbereitstellungseinheit (16a) dazu eingerichtet ist, die Protokolldateneinheit des ersten Kommunikationsprotokolls, die durch die Protokolldateneinheitextraktionseinheit (15a) extrahiert wird, der Anwendung gemäß einer Reihenfolge bereitzustellen, in der der Datenrahmen des ersten Kommunikationsprotokolls durch die Datenrahmenempfangseinheit (5a) von dem ersten Kommunikationsbus empfangen wird.

6. Elektronische Steuervorrichtung (1) gemäß Anspruch 2, wobei:
die Datenrahmensendeeinheit (5d) dazu eingerichtet ist, den Datenrahmen des ersten Kommunikationsprotokolls, der durch die Übertragungszeitprotokollumwandlungseinheit (5c) protokollmäßig umgewandelt wird, an den ersten Kommunikationsbus gemäß einer Reihenfolge zu übertragen, in der die Protokolldateneinheit des ersten Kommunikationsprotokolls durch die Protokolldateneinheiterlangungseinheit (16b) von der Anwendung erlangt wird.

7. Elektronische Steuervorrichtung (1) gemäß Anspruch 1, wobei:
die Empfangszeitprotokollumwandlungseinheit (5b) in der ersten Steuereinheit angeordnet ist,
die Protokolldateneinheitextraktionseinheit (15a) und die Protokolldateneinheitbereitstellungseinheit (16a) in der zweiten Steuereinheit angeordnet sind, und
die erste Steuereinheit und die zweite Steuereinheit dazu eingerichtet sind, um eine Datenkommunikation unter Verwendung des zweiten Kommunikationsprotokolls durchzuführen.

8. Elektronische Steuervorrichtung (1) gemäß Anspruch 2, wobei:
die Protokolldateneinheiterlangungseinheit (16b) und die Protokolldateneinheitsspeichereinheit (15c) in der zweiten Steuereinheit angeordnet sind,
die Übertragungszeitprotokollumwandlungseinheit (5c) in der ersten Steuereinheit angeordnet ist, und
die erste Steuereinheit und die zweite Steuereinheit dazu eingerichtet sind, um eine Datenkommunikation unter Verwendung des zweiten Kommunikationsprotokolls durchzuführen.

9. Elektronische Steuervorrichtung (1) gemäß einem der Ansprüche 1 bis 8, ferner aufweisend:
einen oder mehrere Prozessoren, wobei:
der eine oder die mehreren Prozessoren mindestens eines der folgenden Elemente bereitstellen: die Datenrahmenempfangseinheit (5a); die Empfangszeitprotokollumwandlungseinheit (5b); die Protokolldateneinheitextraktionseinheit (15a); und die Protokolldateneinheitbereitstellungseinheit (16a).

10. Datenkommunikationsverfahren für eine elektronische Steuervorrichtung (1) einschließlich einer Steuereinheit (6), die angepasst ist, um eine Anwendung auszuführen, wobei das Datenkommunikationsverfahren umfasst:
eine Datenrahmenempfangsprozedur (S1) zum Empfangen eines Datenrahmens eines ersten Kommunikationsprotokolls von einem ersten Kommunikationsbus, der konform mit dem ersten Kommunikationsprotokoll ist;
eine Empfangszeitprotokollumwandlungsprozedur (S2) zum protokollmäßigen Umwandeln des Datenrahmens des ersten Kommunikationsprotokolls, der in der Datenrahmenempfangsprozedur (S1) empfangen wird, in einen Datenrahmen eines zweiten Kommunikationsprotokolls;
eine Protokolldateneinheitextraktionsprozedur (S3) zum Extrahieren einer Protokolldateneinheit des ersten Kommunikationsprotokolls aus dem Datenrahmen des zweiten Kommunikationsprotokolls, der in der Empfangszeitprotokollumwandlungsprozedur (S2) protokollmäßig umgewandelt wurde;
eine Empfangszeitprotokolldateneinheitakkumulationsprozedur (S4), die als ein FIFO-Puffer für die Protokolldateneinheit des ersten Kommunikationsprotokolls fungiert, die durch die Protokolldateneinheitextraktionsprozedur (S3) extrahiert wird, und die Protokolldateneinheit des ersten Kommunikationsprotokolls akkumuliert, die durch die Protokolldateneinheitextraktionsprozedur (S3) extrahiert wird; und
eine Protokolldateneinheitbereitstellungsprozedur (S5) zum Bereitstellen der Protokolldateneinheit des ersten Kommunikationsprotokolls, die durch die Protokolldateneinheitextraktionsprozedur (S3) extrahiert wird, einer Anwendung,
**dadurch gekennzeichnet, dass**:
wenn eine festgelegte Identifikationsfilteranweisung von einer Anwendung mitgeteilt wird, eine Antwort auf die mitgeteilte festgelegte Identifikationsfilteranweisung der Anwendung mitgeteilt wird,
wenn der Datenrahmen des zweiten Kommunikationsprotokolls von einer ersten Steuerprozedur empfangen wird, in einem Fall, in dem die festgelegte Identifikationsfilteranweisung von der Anwendung mitgeteilt wurde, überprüft wird, ob eine Identifikation, die durch die mitgeteilte Identifikationsfilteranweisung bestimmt wird, mit einer Identifikation übereinstimmt, die in dem empfangenen Datenrahmen des zweiten Kommunikationsprotokolls gespeichert ist;
wenn der Datenrahmen des zweiten Kommunikationsprotokolls, der die Identifikation speichert, die mit der Identifikation übereinstimmt, die durch die mitgeteilte festgelegte Identifikationsfilteranweisung bestimmt wird, spezifiziert wird, die Protokolldateneinheit des ersten Kommunikationsprotokolls aus dem spezifizierten Datenrahmen des zweiten Kommunikationsprotokolls extrahiert wird und die extrahierte Protokolldateneinheit in der Empfangszeitprotokolldateneinheitakkumulationsprozedur (S4) gespeichert wird; und
wenn eine Leseanweisung von einer Anwendung mitgeteilt wird, die Protokolldateneinheit des ersten Kommunikationsprotokolls, die in der Empfangszeitprotokolldateneinheitakkumulationsprozedur (S4) gespeichert ist, der Anwendung bereitgestellt wird.

11. Datenkommunikationsverfahren gemäß Anspruch 10, ferner aufweisend:
eine Protokolldateneinheiterlangungsprozedur zum Erlangen der Protokolldateneinheit des ersten Kommunikationsprotokolls von der Anwendung;
eine Protokolldateneinheitsspeicherprozedur zum Speichern der Protokolldateneinheit des ersten Kommunikationsprotokolls, die in der Protokolldateneinheiterlangungsprozedur erlangt wird, in dem Datenrahmen des zweiten Kommunikationsprotokolls;
eine Übertragungszeitprotokollumwandlungsprozedur zum protokollmäßigen Umwandeln des Datenrahmens des zweiten Kommunikationsprotokolls, in dem die Protokolldaten des ersten Kommunikationsprotokolls in der Protokolldateneinheitsspeicherprozedur gespeichert werden, in den Datenrahmen des ersten Kommunikationsprotokolls; und
eine Datenrahmenübertragungsprozedur zum Übertragen des Datenrahmens des ersten Kommunikationsprotokolls, der in der Übertragungszeitprotokollumwandlungsprozedur protokollmäßig umgewandelt wird, an den ersten Kommunikationsbus.

12. Datenkommunikationsprogramm, das eine elektronische Steuervorrichtung (1), die eine Steuereinheit (6) einschließlich eines Prozessors beinhaltet, der eingerichtet ist, um das Datenkommunikationsprogramm auszuführen, veranlasst, das Datenkommunikationsprogramm auszuführen, wobei die Ausführung zu einer Anwendung führt, die umfasst:
eine Datenrahmenempfangsprozedur (S1) zum Empfangen eines Datenrahmens eines ersten Kommunikationsprotokolls von einem ersten Kommunikationsbus, der konform mit dem ersten Kommunikationsprotokoll ist;
eine Empfangszeitprotokollumwandlungsprozedur (S2) zum protokollmäßigen Umwandeln des Datenrahmens des ersten Kommunikationsprotokolls, der in der Datenrahmenempfangsprozedur (S1) empfangen wird, in einen Datenrahmen eines zweiten Kommunikationsprotokolls;
eine Protokolldateneinheitextraktionsprozedur (S3) zum Extrahieren einer Protokolldateneinheit des ersten Kommunikationsprotokolls aus dem Datenrahmen des zweiten Kommunikationsprotokolls, der in der Empfangszeitprotokollumwandlungsprozedur (S2) protokollmäßig umgewandelt wurde;
eine Empfangszeitprotokolldateneinheitakkumulationsprozedur (S4), die als ein FIFO-Puffer für die Protokolldateneinheit des ersten Kommunikationsprotokolls fungiert, die durch die Protokolldateneinheitextraktionsprozedur (S3) extrahiert wird, und die Protokolldateneinheit des ersten Kommunikationsprotokolls akkumuliert, die durch die Protokolldateneinheitextraktionsprozedur (S3) extrahiert wird; und
eine Protokolldateneinheitbereitstellungsprozedur (S5) zum Bereitstellen der Protokolldateneinheit des ersten Kommunikationsprotokolls, die durch die Protokolldateneinheitextraktionsprozedur (S3) extrahiert wird, einer Anwendung,
**dadurch gekennzeichnet, dass**:
wenn eine festgelegte Identifikationsfilteranweisung von einer Anwendung mitgeteilt wird, eine Antwort auf die mitgeteilte festgelegte Identifikationsfilteranweisung der Anwendung mitgeteilt wird,
wenn der Datenrahmen des zweiten Kommunikationsprotokolls von einer ersten Steuerprozedur empfangen wird, in einem Fall, in dem die festgelegte Identifikationsfilteranweisung von der Anwendung mitgeteilt wurde, überprüft wird, ob eine Identifikation, die durch die mitgeteilte festgelegte Identifikationsfilteranweisung bestimmt wird, mit einer Identifikation übereinstimmt, die in dem empfangenen Datenrahmen des zweiten Kommunikationsprotokolls gespeichert ist;
wenn der Datenrahmen des zweiten Kommunikationsprotokolls, der die Identifikation speichert, die mit der Identifikation übereinstimmt, die durch die mitgeteilte festgelegte Identifikationsfilteranweisung bestimmt wird, spezifiziert wird, die Protokolldateneinheit des ersten Kommunikationsprotokolls aus dem spezifizierten Datenrahmen des zweiten Kommunikationsprotokolls extrahiert wird und die extrahierte Protokolldateneinheit in der Empfangszeitprotokolldateneinheitakkumulationsprozedur (S4) gespeichert wird; und
wenn eine Leseanweisung von einer Anwendung mitgeteilt wird, die Protokolldateneinheit des ersten Kommunikationsprotokolls, die in der Empfangszeitprotokolldateneinheitakkumulationsprozedur (S4) gespeichert ist, der Anwendung bereitgestellt wird.

13. Datenkommunikationsprogramm gemäß Anspruch 12, das ferner die elektronische Steuervorrichtung (1) veranlasst, auszuführen:
eine Protokolldateneinheiterlangungsprozedur zum Erlangen der Protokolldateneinheit des ersten Kommunikationsprotokolls von der Anwendung;
eine Protokolldateneinheitsspeicherprozedur zum Speichern der Protokolldateneinheit des ersten Kommunikationsprotokolls, die in der Protokolldateneinheiterlangungsprozedur erlangt wird, in dem Datenrahmen des zweiten Kommunikationsprotokolls;
eine Übertragungszeitprotokollumwandlungsprozedur zum protokollmäßigen Umwandeln des Datenrahmens des zweiten Kommunikationsprotokolls, in dem die Protokolldaten des ersten Kommunikationsprotokolls in der Protokolldateneinheitsspeicherprozedur gespeichert werden, in den Datenrahmen des ersten Kommunikationsprotokolls; und
eine Datenrahmenübertragungsprozedur zum Übertragen des Datenrahmens des ersten Kommunikationsprotokolls, der in der Übertragungsprotokollumwandlungsprozedur protokollmäßig umgewandelt wird, an den ersten Kommunikationsbus.

## Revendications

1. Dispositif de commande électronique (1) comprenant :
une unité de commande (6) adaptée pour exécuter une application ;
une unité de réception de trame de données (5a) adaptée pour recevoir une trame de données d'un premier protocole de communication à partir d'un premier bus de communication conforme au premier protocole de communication ;
une unité de conversion de protocole de temps de réception (5b) adaptée pour réaliser une conversion de protocole de la trame de données du premier protocole de communication reçue par l'unité de réception de trame de données (5a) en une trame de données d'un second protocole de communication ;
une unité d'extraction d'unité de données de protocole (15a) adaptée pour extraire une unité de données de protocole du premier protocole de communication à partir de la trame de données du second protocole de communication ayant subi une conversion de protocole par l'unité de conversion de protocole de temps de réception (5b) ;
une unité d'accumulation d'unité de données de protocole de temps de réception (15b) adaptée pour fonctionner comme une mémoire tampon FIFO pour l'unité de données de protocole du premier protocole de communication extraite par l'unité d'extraction d'unité de données de protocole (15a) et pour accumuler l'unité de données de protocole du premier protocole de communication extraite par l'unité d'extraction d'unité de données de protocole (15a) ; et
une unité de fourniture d'unité de données de protocole (16a) adaptée pour fournir l'unité de données de protocole du premier protocole de communication extraite par l'unité d'extraction d'unité de données de protocole (15a) à une application,
**caractérisé en ce que** :
lorsqu'une instruction de filtrage d'identification définie est notifiée par une application, une réponse à l'instruction de filtrage d'identification définie notifiée est notifiée à l'application,
lorsque la trame de données du second protocole de communication est reçue d'une première unité de commande, dans le cas où l'instruction de filtrage d'identification définie a été notifiée par l'application, il est vérifié si une identification désignée par l'instruction de filtrage d'identification définie notifiée correspond à une identification stockée dans la trame de données reçue du second protocole de communication ;
lorsque la trame de données du second protocole de communication stockant l'identification correspondant à l'identification désignée par l'instruction de filtrage d'identification définie notifiée est spécifiée, l'unité de données de protocole du premier protocole de communication est extraite de la trame de données spécifiée du second protocole de communication, et l'unité de données de protocole extraite est stockée dans l'unité d'accumulation d'unité de données de protocole de temps de réception (15b) ; et
lorsqu'une instruction de lecture est notifiée par une application, l'unité de données de protocole du premier protocole de communication stockée dans l'unité d'accumulation d'unité de données de protocole de réception est fournie à l'application.

2. Dispositif de commande électronique (1) selon la revendication 1, comprenant en outre :
une unité d'acquisition d'unité de données de protocole (16b) adaptée pour acquérir l'unité de données de protocole du premier protocole de communication à partir de l'application ;
une unité de stockage d'unité de données de protocole (15c) adaptée pour stocker l'unité de données de protocole du premier protocole de communication acquise par l'unité d'acquisition d'unité de données de protocole (16b) dans la trame de données du second protocole de communication ;
une unité de conversion de protocole de temps de transmission (5c) adaptée pour réaliser une conversion de protocole de la trame de données du second protocole de communication, dans lequel l'unité de données de protocole du premier protocole de communication est stockée par l'unité de stockage d'unité de données de protocole, en trame de données du premier protocole de communication ; et
une unité de transmission de trame de données (5d) adaptée pour transmettre la trame de données du premier protocole de communication, ayant subi une conversion de protocole par l'unité de conversion de protocole de temps de transmission (5c), au premier bus de communication.

3. Dispositif de commande électronique (1) selon la revendication 1, dans lequel :
l'unité de fourniture d'unité de données de protocole (16a) est adaptée pour fournir à l'application l'unité de données de protocole du premier protocole de communication, qui est accumulée par l'unité d'accumulation d'unité de données de protocole de temps de réception (15b).

4. Dispositif de commande électronique (1) selon la revendication 2, comprenant en outre :
une unité d'accumulation d'unité de données de protocole de temps de transmission (15d) adaptée pour accumuler l'unité de données de protocole du premier protocole de communication acquise par l'unité d'acquisition d'unités de données de protocole (16b), dans lequel :
l'unité de stockage d'unité de données de protocole (15c) est adaptée pour stocker l'unité de données de protocole du premier protocole de communication, qui est accumulée par l'unité d'accumulation d'unité de données de protocole de temps de transmission (15d), dans la trame de données du second protocole de communication.

5. Dispositif de commande électronique (1) selon la revendication 1, dans lequel :
l'unité de fourniture d'unité de données de protocole (16a) est adaptée pour fournir l'unité de données de protocole du premier protocole de communication, extraite par l'unité d'extraction d'unité de données de protocole (15a), à l'application selon un ordre dans lequel la trame de données du premier protocole de communication est reçue par l'unité de réception de trame de données (5a) du premier bus de communication.

6. Dispositif de commande électronique (1) selon la revendication 2, dans lequel :
l'unité de transmission de trame de données (5d) est adaptée pour transmettre la trame de données du premier protocole de communication, ayant subi une conversion de protocole par l'unité de conversion de protocole de temps de transmission (5c), au premier bus de communication selon un ordre dans lequel l'unité de données de protocole du premier protocole de communication est acquise par l'unité d'acquisition d'unité de données de protocole (16b) à partir de l'application.

7. Dispositif de commande électronique (1) selon la revendication 1, dans lequel :
l'unité de conversion de protocole de temps de réception (5b) est disposée dans la première unité de commande,
l'unité d'extraction d'unité de données de protocole (15a) et l'unité de fourniture d'unité de données de protocole (16a) sont disposées dans la seconde unité de commande, et
la première unité de commande et la seconde unité de commande sont adaptées pour réaliser la communication de données en utilisant le second protocole de communication.

8. Dispositif de commande électronique (1) selon la revendication 2, dans lequel :
l'unité d'acquisition d'unité de données de protocole (16b) et l'unité de stockage d'unité de données de protocole (15c) sont disposées dans la seconde unité de commande,
l'unité de conversion de protocole de temps de transmission (5c) est disposée dans la première unité de commande, et
la première unité de commande et la seconde unité de commande sont adaptées pour réaliser la communication de données en utilisant le second protocole de communication.

9. Dispositif de commande électronique (1) selon l'une quelconque des revendications 1 à 8, comprenant en outre :
un ou plusieurs processeurs, dans lequel :
le ou les processeurs fournissent au moins l'une parmi : l'unité de réception de trame de données (5a) ; l'unité de conversion de protocole de temps de réception (5b) ; l'unité d'extraction d'unité de données de protocole (15a) ; et l'unité de fourniture d'unité de données de protocole (16a).

10. Procédé de communication de données pour un dispositif de commande électronique (1) incluant une unité de commande (6) adaptée pour exécuter une application, le procédé de communication de données comprenant :
une procédure de réception de trame de données (S1) pour recevoir une trame de données d'un premier protocole de communication à partir d'un premier bus de communication conforme au premier protocole de communication ;
une procédure de conversion de protocole de temps de réception (S2) pour réaliser une conversion de protocole de la trame de données du premier protocole de communication reçue dans la procédure de réception de trame de données (S1) en une trame de données d'un second protocole de communication ;
une procédure d'extraction d'unité de données de protocole (S3) pour extraire une unité de données de protocole du premier protocole de communication à partir de la trame de données du second protocole de communication ayant subi une conversion de protocole dans la procédure de conversion de protocole de temps de réception (S2) ;
une procédure d'accumulation d'unité de données de protocole de temps de réception (S4) qui fonctionne comme une mémoire tampon FIFO pour l'unité de données de protocole du premier protocole de communication extraite par la procédure d'extraction d'unité de données de protocole (S3) et qui accumule l'unité de données de protocole du premier protocole de communication extraite par la procédure d'extraction d'unité de données de protocole (S3) ; et
et une procédure de fourniture d'unité de données de protocole (S5) pour fournir à une application l'unité de données de protocole du premier protocole de communication extraite par la procédure d'extraction d'unité de données de protocole (S3),
**caractérisé en ce que** :
lorsqu'une instruction de filtrage d'identification définie est notifiée par une application, une réponse à l'instruction de filtrage d'identification définie notifiée est notifiée à l'application,
lorsque la trame de données du second protocole de communication est reçue d'une première procédure de commande, dans le cas où l'instruction de filtrage d'identification définie a été notifiée par l'application, il est vérifié si une identification désignée par l'instruction de filtrage d'identification notifiée correspond à une identification stockée dans la trame de données reçue du second protocole de communication ;
lorsque la trame de données du second protocole de communication stockant l'identification correspondant à l'identification désignée par l'instruction de filtrage d'identification définie notifiée est spécifiée, l'unité de données de protocole du premier protocole de communication est extraite de la trame de données spécifiée du second protocole de communication, et l'unité de données extraite est stockée dans la procédure d'accumulation d'unité de données de protocole de réception (S4) ; et
lorsqu'une instruction de lecture est notifiée par une application, l'unité de données de protocole du premier protocole de communication stockée dans la procédure d'accumulation d'unité de données de protocole de temps de réception (S4) est fournie à l'application.

11. Procédé de communication de données selon la revendication 10, comprenant en outre :
une procédure d'acquisition d'unité de données de protocole pour acquérir l'unité de données de protocole du premier protocole de communication à partir de l'application ;
une procédure de stockage d'unité de données de protocole pour stocker l'unité de données de protocole du premier protocole de communication acquise dans la procédure d'acquisition d'unité de données de protocole dans la trame de données du second protocole de communication ;
une procédure de conversion de protocole de transmission pour réaliser une conversion de protocole de la trame de données du second protocole de communication, dans laquelle les données de protocole du premier protocole de communication sont stockées dans la procédure de stockage d'unité de données de protocole, en la trame de données du premier protocole de communication ; et
une procédure de transmission de trame de données pour transmettre la trame de données du premier protocole de communication ayant subi une conversion de protocole dans la procédure de conversion de protocole de temps de transmission au premier bus de communication.

12. Programme de communication de données amenant un dispositif de commande électronique (1), incluant une unité de commande (6) incluant un processeur adapté pour exécuter le programme de communication de données, l'exécution menant à une application comprenant :
une procédure de réception de trame de données (S1) pour recevoir une trame de données d'un premier protocole de communication à partir d'un premier bus de communication conforme au premier protocole de communication ;
une procédure de conversion de protocole de temps de réception (S2) pour réaliser une conversion de protocole de la trame de données du premier protocole de communication reçue dans la procédure de réception de trame de données (S1) en une trame de données d'un second protocole de communication ;
une procédure d'extraction d'unité de données de protocole (S3) pour extraire une unité de données de protocole du premier protocole de communication à partir de la trame de données du second protocole de communication ayant subi une conversion de protocole dans la procédure de conversion de protocole de temps de réception (S2) ;
une procédure d'accumulation d'unité de données de protocole de temps de réception (S4) qui fonctionne comme une mémoire tampon FIFO pour l'unité de données de protocole du premier protocole de communication extraite par la procédure d'extraction d'unité de données de protocole (S3) et qui accumule l'unité de données de protocole du premier protocole de communication extraite par la procédure d'extraction d'unité de données de protocole (S3) ; et
et une procédure de fourniture d'unité de données de protocole (S5) pour fournir à une application l'unité de données de protocole du premier protocole de communication extraite par la procédure d'extraction d'unité de données de protocole (S3),
**caractérisé en ce que** :
lorsqu'une instruction de filtrage d'identification définie est notifiée par une application, une réponse à l'instruction de filtrage d'identification définie notifiée est notifiée à l'application,
lorsque la trame de données du second protocole de communication est reçue d'une première procédure de commande, dans le cas où l'instruction de filtrage d'identification définie a été notifiée par l'application, il est vérifié si une identification désignée par l'instruction de filtrage d'identification définie notifiée correspond à une identification stockée dans la trame de données reçue du second protocole de communication ;
lorsque la trame de données du second protocole de communication stockant l'identification correspondant à l'identification désignée par l'instruction de filtrage d'identification définie notifiée est spécifiée, l'unité de données de protocole du premier protocole de communication est extraite de la trame de données spécifiée du second protocole de communication, et l'unité de données extraite est stockée dans la procédure d'accumulation d'unité de données de protocole de réception (S4) ; et
lorsqu'une instruction de lecture est notifiée par une application, l'unité de données de protocole du premier protocole de communication stockée dans la procédure d'accumulation d'unité de données de protocole de temps de réception (S4) est fournie à l'application.

13. Programme de communication de données selon la revendication 12, amenant en outre le dispositif de commande électronique (1) à exécuter :
une procédure d'acquisition d'unité de données de protocole pour acquérir l'unité de données de protocole du premier protocole de communication à partir de l'application ;
une procédure de stockage d'unité de données de protocole pour stocker l'unité de données de protocole du premier protocole de communication acquise dans la procédure d'acquisition d'unité de données de protocole dans la trame de données du second protocole de communication ;
une procédure de conversion de protocole de transmission pour réaliser une conversion de protocole de la trame de données du second protocole de communication, dans laquelle les données de protocole du premier protocole de communication sont stockées dans la procédure de stockage d'unité de données de protocole, en la trame de données du premier protocole de communication ; et
une procédure de transmission de trame de données pour transmettre la trame de données du premier protocole de communication, ayant subi une conversion de protocole dans la procédure de conversion de protocole de transmission, au premier bus de communication.
